# EUROPÄISCHE PATENTANMELDUNG

(11) **EP 1 970 555 A2**
(43) Veröffentlichungstag der Anmeldung: **17.09.2008**
(21) Anmeldenummer: 08101294.0
(22) Anmeldetag: 05.02.2008
(51) Int. Cl.: F02D 41/22

(54) **Verfahren und Vorrichtung zur Überwachung eines elektrischen Stromkreises**

(30) Priorität: 14.03.2007 DE 102007012311
(71) Anmelder: ROBERT BOSCH GMBH, 70442 Stuttgart (DE)
(72) Erfinder: Huber, Andreas, 71711, Steinheim (DE); Schempp, Stefan, 73249, Wernau (DE); Bitzer, Matthias, 71116, Gaertringen (DE)

(57) **Zusammenfassung**

Es werden eine Vorrichtung und ein Verfahren zur Überwachung eines elektrischen Stromkreises, insbesondere einer Endstufe, beschrieben. Die Überwachung ist nur in bestimmten Betriebssituationen aktiv. Die Überwachung ist nicht aktiv, wenn die Folgen einer Fehlerdiagnose groß sind und/oder die Überwachung ist aktiv, wenn die Wahrscheinlichkeit eines Fehlers groß ist.

## Beschreibung

### Stand der Technik

Die Erfindung geht aus von einer Vorrichtung und einem Verfahren zur Überwachung eines elektrischen Stromkreises, insbesondere einer Endstufe. Solche Endstufen werden insbesondere bei der Steuerung von Brennkraftmaschinen eingesetzt. Beispielsweise werden diese Endstufen zur Steuerung der Injektoren verwendet, die die einzuspritzende Kraftstoffmenge festlegen.

Üblicher Weise werden diese elektrischen Stromkreise auf korrekte Funktionsweise überwacht. So werden beispielsweise Kurzschlüsse zwischen dem Verbraucher und der Versorgungsspannung, zwischen dem Verbraucher und dem Masseanschluss sowie andere Kurzschlüsse und Leitungsunterbrechungen überwacht. Hierzu werden üblicher Weise, die durch den Stromkreis fließenden Ströme bzw. die an verschiedenen Punkten anliegenden Spannungswerte überwacht. Insbesondere werden die Stromwerte mit Schwellenwerten verglichen, die vom Ansteuerzustand abhängen.

Immer enger werdende Toleranzen und höhere Anforderungen an die Diagnosefähigkeit bei gleichzeitiger Komplexitätssteigerung der Endstufe führen zu dem Problem, dass sich der Bereich, in dem sicher ein Defekt erkannt werden kann, und der Bereich, in dem eine ordnungsgemäße Funktion erkannt wird, sich stark annähern und zum Teil schon überlagern. Dies kann zur Folge haben, dass ein Fehler erkannt wird, obwohl kein Fehler vorliegt bzw. das ein fehlerfreier Zustand erkannt wird, obwohl ein Fehler vorliegt.

Üblicher Weise erfolgt bei einem erkannten Fehler ein Eintrag im so genannten Fehlerspeicher, der das Einschalten der Diagnoselampe im Armaturenbrett nach sich zieht. Ferner werden applizierte Fehlerersatzreaktionen aktiviert. Im Falle der Injektordiagnose bedeutet dies häufig ein Abstellen der Brennkraftmaschine. Ein solches Abstellen in einem Zustand, in dem die Diagnose auf Fehler erkennt, obwohl kein Fehler vorliegt, muss sicher vermieden werden.

Das bedeutet, es gilt die Robustheit der Diagnosefunktion gegen fehlerhafte Diagnose zu steigern. D. h. die Zahl der Fehlererkennung, obwohl kein Fehler vorliegt, soll deutlich gesenkt bzw. ein solcher Zustand, dass ein Fehler erkannt wird, obwohl kein Fehler vorliegt, soll vermieden werden.

Erfindungsgemäß wird die Erkenntnis verwendet, dass die Auftretungswahrscheinlichkeit der Fehler, die entdeckt werden sollen, zum Teil stark von verschiedenen Ereignissen abhängen. So treten beispielsweise Kurzschlüsse zwischen Batteriespannung und dem Verbraucher und andere Kurzschlüsse in der Regel in Folge eines Eingriffs in der Werkstatt oder während der Produktion auf. Die Wahrscheinlichkeit, dass ein solcher Fehler während des Betriebs auftritt, ist vernachlässigbar gering.

Die erfindungsgemäße Vorgehensweise ist, dass die Überwachung der Endstufe nur dann erfolgt, wenn die Erwartung des Defekts überdurchschnittlich hoch ist. In Betriebssituationen hingegen, in denen üblicherweise bestimmte Fehler nicht auftreten, wird auf diese Fehler nicht überwacht. Beispielsweise bedeutet dies, dass in Zuständen die als relativ kurzschlusssicher eingestuft werden, ist die Überwachung auf Kurzschluss inaktiv ist. Gleichzeitig ist vorgesehen, dass die Überwachung nur dann stattfindet, wenn die Folgen einer Fehlerdiagnose, beispielsweise das Abstellen der Brennkraftmaschine im Falle eines Fehlers, keine gravierende Auswirkung haben.

Bei der besonders vorteilhaften Ausführungsform bedeutet dies, dass die Überwachung nicht aktiv ist, wenn die Folgen einer möglichen Fehlerdiagnose groß sind und die Überwachung nur dann aktiv ist, wenn die Auftretungswahrscheinlichkeit eines Fehlers hoch ist.

Die Folge einer möglichen Fehldiagnose ist dann groß, wenn das Fahrzeug fährt, d. h. die Fahrgeschwindigkeit größer als 0 Kilometer ist. Ferner sind die Folgen groß, wenn ein neuer Startversuch nach dem Abwürgen der Brennkraftmaschine erfolgt. Die Wahrscheinlichkeit des Auftretens eines Fehlers ist insbesondere nach einer Wartung der Brennkraftmaschine oder während der Produktion der Brennkraftmaschine besonders hoch.

Bei einer besonders vorteilhaften Ausgestaltung ist vorgesehen, dass die Überwachung nur nach dem Steuergeräthochlauf erfolgt. D. h. sie erfolgt nur dann, wenn das Steuergerät erstmalig eingeschaltet wird, nach dem eine Wartung durchgeführt wurde oder erstmalig nach der Fertigstellung der Brennkraftmaschine und dem Einbau des Steuergeräts oder anderer Komponenten.

Bei einer einfachen Ausgestaltungen ist vorgesehen, dass die Überwachung nicht aktiv ist, wenn die Folgen einer Fehlerdiagnose groß sind. Bei einer zweiten Ausgestaltung ist vorgesehen, wenn die erste Überwachung aktiv ist, wenn die Wahrscheinlichkeit eines Fehlers groß ist. Bei einer besonders vorteilhaften Ausgestaltung ist vorgesehen, dass diese Bedingungen mit "und" verknüpft ist, das heißt dass die Überwachung durchgeführt wird, wenn die Folgen einer Fehlerdiagnose gering und die Wahrscheinlichkeit eines Fehlers groß ist.

### Offenbarung der Erfindung

### Vorteile der Erfindung

### Kurze Beschreibung der Zeichnung

Ausführungsbeispiele der Erfindung sind in den Zeichnungen dargestellt und in der nachfolgenden Beschreibung näher erläutert. Es zeigen:
- Figur 1: die wesentlichen Elemente eines elektrischen Stromkreises,
- Figur 2: einen Zustandsautomaten zur Beschreibung der erfindungsgemäßen Vorgehensweise und
- Figur 3: ein Flussdiagramm zur Darstellung der erfindungsgemäßen Vorgehensweise

### Ausführungsformen der Erfindung

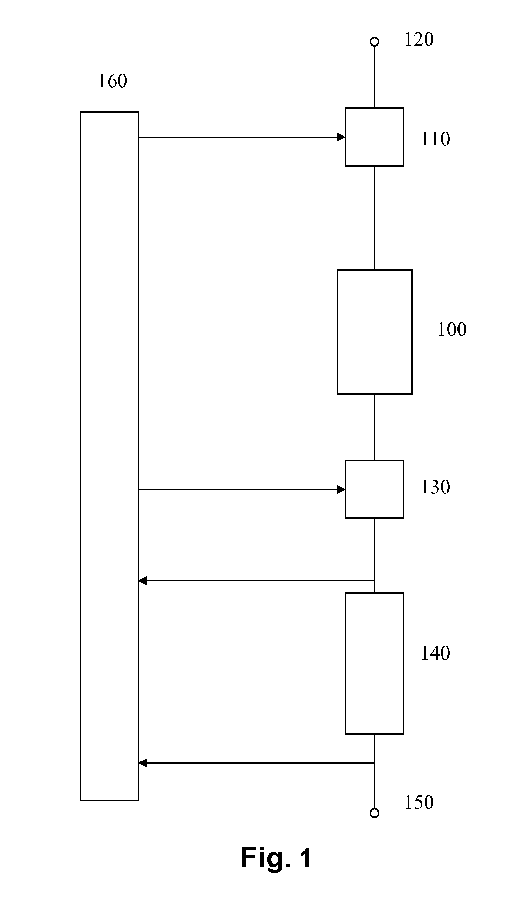

In der Figur 1 sind die wesentlichen Elemente eines zu überwachenden elektrischen Stromkreises dargestellt.

In Figur 1 sind die wesentlichen Elemente eines zu überwachenden elektrischen Stromkreises sowie die Überwachungseinrichtung dargestellt. Mit 100 ist ein Verbraucher bezeichnet. bei dem Verbraucher handelt es sich beispielsweise um das Magnetventil eines Injektors, der zur Steuerung einer Brennkraftmaschine eingesetzt wird. Insbesondere werden solche Injektoren zur Steuerung bei Kraftstoffeinspritzung oder zur Durchsicherung von anderen Flüssigkeit in Brennkraftmaschinen eingesetzt. Der entsprechende Verbraucher kann auch als Piezoaktor ausgebildet sein. In diesem Fall ist die Schaltung entsprechend anzupassen. Das erfindungsgemäße Verfahren ist bei seiner Anwendung nicht auf die Verwendung bei Magnetventilen beschränkt sondern kann auch bei anderen Verbrauchern wie beispielsweise Piezoaktoren eingesetzt werden. Solche Verbraucher werden nicht nur zur Steuerung der Kraftstoffzumessung sondern auch für andere Aufgaben, insbesondere im Kraftfahrzeug eingesetzt.

Der Verbraucher 100 steht in der dargestellten Ausführungsform über ein erstes Schaltmittel 110 mit einem ersten Versorgungsanschluss 120 einer Versorgungsspannung in Verbindung. Des weiteren steht der Verbraucher 100 über ein zweites Schaltmittel 130 sowie über ein Stromerfassungsmittel 140 mit einem zweiten Anschluss 150 der Versorgungsspannung in Verbindung. Bei dem zweiten Anschluss 150 handelt es sich vorzugsweise um einen Masseanschluss. Die Anordnung des Strommessmittels 140 ist lediglich beispielhaft gewählt. Es kann auch an jeder beliebigen anderen Stelle der Schaltung angeordnet sein.

Das Schaltmittel 110 und das Schaltmittel 130 werden von einer Steuereinheit 160 mit Ansteuersignalen beaufschlagt. Des weiteren wird der Spannungsabfall an dem Strommessmittel 140 von der Steuereinheit 160 ausgewertet.

Ausgehend von nicht dargestellten Eingangssignalen bestimmt die Ansteuereinheit 160 die Ansteuersignale für das erste und das zweite Schaltmittel. Besonders vorteilhaft ist es, wenn eine Stromregelung vorgesehen ist, bei der der Istwert mit dem Strommessmittel 140 ermittelt wird.

Die erfindungsgemäße Vorgehensweise ist dabei nicht auf eine solche Schaltungsanordnung beschränkt. Sie kann auch bei anderen Schaltungsanordnungen, die ähnlich aufgebaut sind, eingesetzt werden.

Bei solchen Schaltungsanordnungen kann nun der Fall eintreten, dass der Verbraucher mit dem ersten Anschluss 120 oder mit dem zweiten Anschluss 150 der Versorgungsspannung kurzgeschlossen wird. Insbesondere kann vorgesehen sein, dass eines der Schaltmittel 110 bzw. 130 in seinen geschlossenen Zustand verbleibt bzw. dass ein Leitungskurzschluss zwischen den Anschlüssen des Verbrauchers und der Versorgungsspannung auftritt.

Solche Kurzschlüsse und Fehler im Bereich des elektrischen Stromkreises werden von der Steuereinheit 160 durch Auswerten des Stroms und/oder der Spannung, der an verschiedenen Punkten abgegriffen wird, erkannt.

Erfindungsgemäß ist nun vorgesehen, dass diese Überwachung nicht in allen Betriebszuständen durchgeführt wird sondern dass die Überwachung nur in den Betriebszuständen durchgeführt wird, in denen ein Fehler bevorzugt auftritt und/oder das Überwachungen in den Betriebszuständen durchgeführt wird, bei denen eine Fehlererkennung und der daraus resultierenden Fehlerreaktion keine erheblichen Auswirkungen hat. Dies ist beispielsweise dann gegeben, wenn das Fahrzeug steht. In diesem Fall hat eine Kraftstoffabschaltung aufgrund eines Fehlers keine gravierenden Auswirkungen.

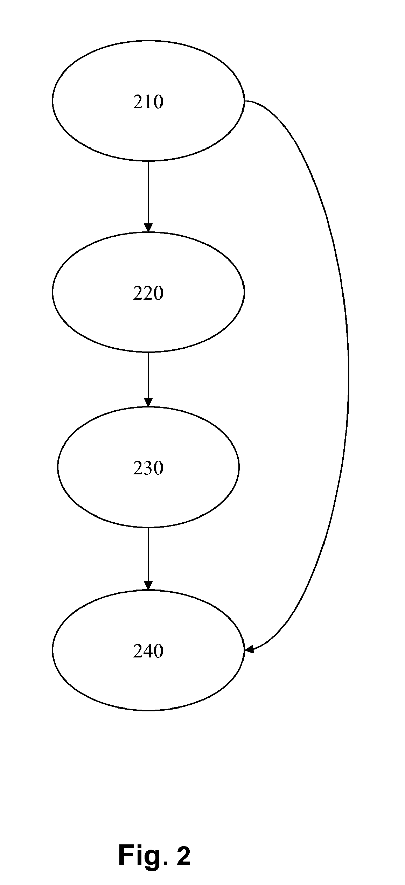

Figur 2 ist eine besonders vorteilhafte Ausführungsform der Vorgehensweise anhand eines Zustandsautomaten dargestellt.

Bei einem ersten Zustand 110 wird der Zustandsautomat in der Steuergeräteinitialisierung gestartet. Ausgehend von diesem Zustand 110 gibt es zwei Übergangsmöglichkeiten. Sollte im Steuergerät zuvor eine Recovery erfolgt sein, wird direkt in den Zustand 240 geschaltet. Ist dies nicht der Fall, wird in den Zustand 220 geschaltet. Eine solche Recovery liegt beispielsweise vor, wenn der Motor abgewürgt wurde und ein Neustart im Nachlauf erfolgt.

Im zweiten Zustand 220 wird so lange gewartet, bis die Brennkraftmaschine gestartet wird. Die Erkennung, ob die Brennkraftmaschine gestartet wird, erfolgt über eine Drehzahlschwelle und/oder die Einspritzfreigabe. Sind die Bedingungen erfüllt, wird ein Timer gestartet und in den Zustand 230 übergegangen.

In dem Zustand 230 ist die Überwachung aktiv. Der Zustand 230 wird verlassen und es wird in den Zustand 240 übergegangen, wenn der Timer abgelaufen ist. Die Aufgabe des Timers ist es, die Entprellung eines Fehlers zu gewährleisten und sicherzustellen, dass alle Injektoren angesteuert werden, damit überprüft werden kann, ob alle Injektoren oder alle Verbraucher geprüft sind.

In dem Zustand 240 ist die Überwachung inaktiv. Ein Verlassen dieses Zustandes ist nicht möglich. Dieser Zustand wird erst dann verlassen, wenn das Steuergerät abgeschaltet wird und ein Neustart und damit eine Steuergeräteinitialisierung erfolgte. In diesem Zustand erfolgt üblicherweise der Betrieb der Brennkraftmaschine nach dem Start des Fahrzeugs, in das die Brennkraftmaschine eingebaut ist.

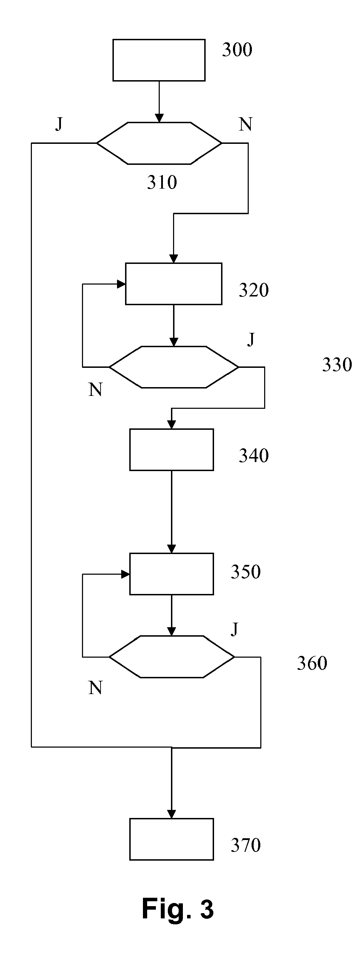

In Figur 3 ist die besonders vorteilhafte Vorgehensweise als Flussdiagramm dargestellt. In einem ersten Schritt 300 beginnt das Programm. Dies erfolgt mit der Steuergeräteinitialisierung. Die Abfrage 310 überprüft, ob zuvor eine Recovery erfolgt ist. Ist dies der Fall, so geht das Programm zu Schritt 370, d. h. in den Zustand 240 über. Ist dies nicht der Fall, so folgt Schritt 320, d. h. es wird in den Zustand 220 übergegangen. Dies erfolgt vorzugsweise noch während der Initialisierung des Steuergeräts.

Im Schritt 320 werden verschiedene Betriebskenngrößen wie beispielsweise die Drehzahl erfasst bzw. es werden Signale ermittelt, die beispielsweise eine Einspritzfreigabe kennzeichnen. Ausgehend von diesen Größen wird in Schritt 330 überprüft, ob die Brennkraftmaschine gestartet hat. Ist dies nicht der Fall, so erfolgt erneut Schritt 320. Anstelle der Größen kann auch direkt ein Signal, dass in der Motorsteuerung vorliegt und eine gestartete Brennkraftmaschine anzeigt, ausgewertet werden. Ist ein erfolgreicher Start erkannt, d. h. eine Drehzahlschwelle ist überschritten und/oder die Einspritzfreigabe liegt vor, so wird in Schritt 340 ein Timer gestartet und anschließend in den Schritt 350 und damit in den Zustand 230 übergegangen.

Im Schritt 350 und damit im Zustand 230 erfolgt die Überwachung auf Fehler in dem elektrischen Stromkreis. Die Abfrage 360 überprüft, ob der Timer abgelaufen ist. Ist dies nicht der Fall, so wird die Überwachung in Schritt 350 fortgesetzt. Ist der Timer abgelaufen, so wird in Schritt 370 und damit in Zustand 240 übergegangen.

In der oben beschriebenen Ausführungsform erfolgt die Überprüfung in einem Zustand in dem üblicherweise Fehler auftreten und in dem eine Fehlerreaktion keine Auswirkungen auf das betriebene Fahrzeug hat.

Bei einer alternativen Ausgestaltung kann auch vorgesehen sein, dass lediglich überprüft wird, ob ein Zustand vorliegt, in dem eine Fehlerreaktion keine wesentlichen Auswirkungen auf das Fahrzeug besitzt. Ein solcher Zustand liegt beispielsweise vor, wenn das Fahrzeug steht. Die Überprüfung erfolgt vorzugsweise abhängig von der Fahrgeschwindigkeit des Fahrzeugs. D.h. ist die Geschwindigkeit kleiner als ein Schwellenwert, der nahe bei Null liegt, so erfolgt die Überprüfung im Zustand 230. Auf den Zustandsautomaten in Figur 2 übertragen bedeutet dies, abhängig von der Geschwindigkeit des Fahrzeugs wird zwischen den Zuständen 230 und 240 gewechselt.

Bei einer alternativen Ausgestaltung kann auch vorgesehen sein, dass lediglich überprüft wird, ob ein Zustand vorliegt, in dem ein Fehler häufiger vorliegt. Dies ist beispielsweise nach der ersten Inbetriebnahme des Fahrzeugs nach der Fertigung oder nach eine Reparatur oder einem Werkstattaufenthalt der Fall. Bei dieser Ausführungsform wird abhängig von diesen Bedingungen direkt in den Zustand 240 übergegangen.

## Patentansprüche

1. Verfahren zur Überwachung eines elektrischen Stromkreises, insbesondere einer Endstufe, wobei die Überwachung nur in bestimmten Betriebssituationen aktiv ist, **dadurch gekennzeichnet, dass** die Überwachung nicht aktiv ist, wenn die Folgen einer Fehlerdiagnose groß sind und/oder dass die Überwachung aktiv ist, wenn die Wahrscheinlichkeit eines Fehlers groß ist.

2. Verfahren nach Anspruch 1, dass nach einem Start der Brennkraftmaschine die Überwachung für eine bestimmte Zeitdauer aktiv ist.

3. Verfahren nach Anspruch 1, dass nach einer Recovery keine Überwachung erfolgt.

4. Verfahren nach Anspruch 1, **dadurch gekennzeichnet, dass** die Überwachung unmittelbar nach dem Start der Brennkraftmaschine aktiv ist.

5. Verfahren nach Anspruch 4, **dadurch gekennzeichnet, dass** die Überwachung nach einem Werkstattaufenthalt oder nach der ersten Inbetriebnahme nach der Fertigung aktiv ist.

6. Verfahren nach Anspruch 1, **dadurch gekennzeichnet, dass** die Überwachung des Fahrgeschwindigkeiten größer Null nicht aktiv ist.

7. Vorrichtung zur Überwachung eines elektrischen Stromkreises, insbesondere einer Endstufe, wobei die Überwachung nur in bestimmten Betriebssituationen aktiv ist, **dadurch gekennzeichnet, dass** Mittel vorgesehen sind, die die Überwachung nicht aktiveren, wenn die Folgen einer Fehlerdiagnose groß sind und/oder die Überwachung aktiver, wenn die Wahrscheinlichkeit eines Fehlers groß ist.
